(19) Europäisches Patentamt
European Patent Office
Office européen des brevets

(11) Publication number: 0 214 552 B1

(12) # EUROPEAN PATENT SPECIFICATION

(45) Date of publication of the patent specification: **26.09.90**

(51) Int. Cl.⁵: **C08J 9/06,** C08J 9/10, C08L 69/00, C08L 67/02

(21) Application number: **86111850.3**

(22) Date of filing: **27.08.86**

(54) **Foamable moldings compositions.**

(30) Priority: **09.09.85 US 774679**

(43) Date of publication of application: **18.03.87 Bulletin 87/12**

(45) Publication of the grant of the patent: **26.09.90 Bulletin 90/39**

(84) Designated Contracting States: **DE FR GB IT NL**

(56) References cited:
**US-A- 3 888 801**
**US-A- 4 207 402**
**US-A- 4 420 584**

(73) Proprietor: **MOBAY CORPORATION, Patent Department Mobay Road, Pittsburgh Pennsylvania 15205-9741(US)**

(72) Inventor: **White, Roger J., 2663 Sunnyfield Drive, Pittsburgh PA 15241(US)**
Inventor: **Krishnan, Sivaram, 1653 Little Meadow Road, Pittsburgh PA 15241(US)**
Inventor: **Siebourg, Wolfgang, Dr., Augustastrasse 24, D-5300 Bonn 2(DE)**

(74) Representative: **Petrovicki, Wolfgang, Dr. et al, c/o Bayer Aktiengesellschaft Zentralbereich Patente Marken und Lizenzen, D-5090 Leverkusen, Bayerwerk(DE)**

EP 0 214 552 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Foamable molding compositions containing chemical blowing agents are known. U.S. Patent 3,888,801 discloses the chemical blowing agents which are suitable in the context of the present invention. Resins which are suitable in the present invention are also disclosed in that patent. Also known are the anhydrides of the invention; U.S. Patent 4,420,584 discloses glass filled polycarbonate compositions having an improved impact strength, containing these anhydrides. The art however does not appear to have recognized the unexpected advantages associated with the combination of these components in the context of the present invention.

Thus the subject of the instant invention is a foamable thermoplastic molding composition comprising

(i) a foamable thermoplastic resin,
(ii) 0.01 to 10 percent, preferably 0.1 to 5 percent, of a polymeric compound containing at least one cyclic anhydride in its repeating unit,
(iii) 0.05 to 15 percent of a chemical blowing agent which decomposition product comprises a primary amine, and
(iv) an amount of 0.05 to 5 percent of a nucleating agent for structural foam sufficient to produce a substantially uniform cell size in the resulting foam,
said percents being in relation to the weight of said (i).

DETAILED DESCRIPTION OF THE INVENTION

The polymeric resin component of the composition of the invention is a thermoplastic resin which is both suitable for foaming, i.e. foamable, and sensitive to the foaming agent's decomposition products which contain primary amines, for instance, an amino urazole. Sensitivity in the present context is considered to be a proclivity to structural degradation which is expressed in terms of a reduction in molecular weight which results upon exposing the resins to the decomposition products at the molding temperature of the resin. Among the sensitive resins, there are thermoplastic polycarbonate, thermoplastic polyalkylene terephthalate, thermoplastic aromatic polyester and thermoplastic polyester-carbonate. The preferred resins are thermoplastic carbonate and thermoplastic polyalkylene terephthalate.

In the present context, polycarbonate resins preferably have a molecular weight (weight average) of 10,000 to 200,000, more preferably 20,000 to 80,000, and may alternatively be characterized as having a melt flow rate per ASTM D-1238 at 300°C, of 1 to 24 gm/10 minutes, preferably 2-6 gm/10 minutes. Polycarbonates which are suitable for the preparation of the preferred compositions of the invention are known in the art and in the market.

Dihydroxy compounds suitable for the preparation of the polycarbonates of the invention are for example hydroquinone, resorcinol, bis(hydroxyphenyl)-alkanes, bis-(hydroxyphenyl)-cycloalkanes, bis-(hydroxyphenyl)-ethers, bis-(hydroxyphenyl)-ketones, bis-(hydroxyphenyl)-sulfoxides, bis-(hydroxyphenyl)-sulfides, bis-(hydroxyphenyl)-sulfones and α,α-bis-(hydroxyphenyl)-diisopropyl-benzenes. These and further suitable aromatic dihydroxy compounds are described, for example, in the U.S. Patent 3,028,365 and in the monograph H. Schnell, Chemistry and Physics of Polycarbonates, Interscience Publisher, New York, 1964. Further examples of suitable bisphenols are 2,2-bis-(4-hydroxyphenyl)-propane (bisphenol A), 2,2-bis-(4-hydroxyphenyl)-2-methyl-butane, 1,1-bis-(4-hydroxyphenyl)-cyclohexane, α,α-bis-(4-hydroxyphenyl)-p-diisopropylbenzene, 2,2-bis-(3-chloro-4-hydroxyphenyl)-propane, dihydroxybenzophenone and 4,4'-sulfonyl diphenol.

The most preferred dihydroxy compound is 2,2-bis-(4-hydroxyphenyl)-propane (bisphenol A).

The polycarbonates of the invention may entail in their structure, unites derived from one or more of the suitable dihydroxy compounds.

The preparation of polycarbonate resins may be carried out in accordance with any of the processes known in the art, for example, by the interfacial polycondensation process, polycondensation in a homogeneous phase or by transesterification.

In the preparation of the polycarbonate resins of the invention, monofunctional reactants such as monophenols may be used in order to limit their respective molecular weights. Also, branching agents may be employed. Branching may be obtained by the incorporation of small amounts, preferably of between 0.05 to 2.0 mol % (relative to diphenols employed), of trifunctional or more than trifunctional compounds, especially compouns having three or more phenolic hydroxyl groups. Polycarbonates of this type are also known in the art (see for example DE-PS 1 570 533 and DE-PS 2 500 092).

Some examples of compounds with three of more than three phenolic hydroxyl groups which can be used are phloroglucinol, 4,6-dimethyl-2,4,6-tri-(4-hydroxyphenyl)-heptane, 1,1,1-tri-(4-hydroxyphenyl)-ethane, tri-(4-hydroxyphenyl)-phenylmethane, 2,2-bis[4,4-bis-(4-hydroxyphenyl)-cyclohexyl]-propane, 2,4-bis-(4-hydroxyphenylisopropyl)-phenol, 2-(4-hydroxyphenyl)-2-(2,4-dihydroxyphenyl)-propane, hexa-(4-(4-hydroxyphenylisopropyl)-phenyl-orthoterephthalic acid ester, tetra-4-hydroxyphenyl)-methane, tetra-(4-(4-hydroxyphenylisopropyl)-phenoxy)-methane and 1,4-bis-(4' ,4"-dihydroxytriphenyl)-methyl-benzene. Some of the other trifunctional compounds are 2,4-dihydroxy-benzoic acid, trimesic acid, cyanuric chloride and 3,3-bis-(4-hydroxyphenyl)-2-oxo-2,3-dihydroindole.

The polyalkylene terephthalate resins which are suitable in the present context are known. The preferred species, polyethylene terephthalate (PET) and polybutylene terephthalate (PBT) are available in commerce. Their chemical makeup and processes for preparation are known and have been described in, among others, U.S. Patents 2,465,319 and 3,047,539.

Aromatic polyesters and polyester-carbonates are known in the art. (See for example DE-OS 3 346 946 (Le A 22 776), U.S. Patent 4,252,939 and the article "Synthesis of Poly(ester Carbonate) Copolymers", D.C. Prevorsek et al, Journal of Polymer Science: Polymer Chemistry Edition, Vol. 18, 75-90 (1980).) The relative solution viscosity ($\eta_{rel}$) of the aromatic polyesters and polyester carbonates suitable in the present context generally lies in the range of from 1.15 to 1.40 preferably from 1.20 to 1.35 (measured in solutions of 0,5 g of polycarbonate in 100 ml of $CH_2Cl_2$ solution at 25°C).

The blowing agent in the present context is characterized in that its thermal decomposition products comprise a primary amine, preferably an amino urazole. Among the suitable agents, there are hydrazodicarboxylates which are noted for the great volume of gas evolution attendant upon their thermal decomposition. These hydrzadicarboxylates conform to

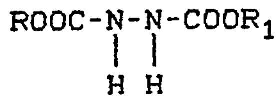

where R and $R_1$ independently denote a member selected from the group consisting of primary, secondary and tertiary straight-chain or branched-chain $C_1$-$C_8$ alkyl, $C_5$-$C_8$ cycloalkyl, $C_6$-$C_{10}$ aryl, $C_7$-$C_{10}$ aralkyl and $C_7$-$C_{10}$ alkaryl radicals. Preferred species have at least one of R and $R_1$ selected from the group consisting of isopropyl, secondary butyl and tertiary butyl and the other of R and $R_1$ is a $C_1$-$C_4$ alkyl. Most preferred species are those wherein both R and $R_1$ indenpendently are selected from the group consisting of isopropyl, secondary butyl and tertiary butyl. The foaming agents most suitable is diisopropylhydrozodicarboxylate:

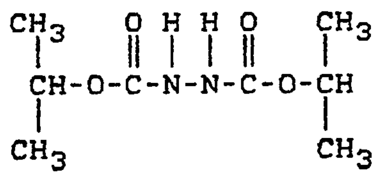 (I)

U.S. Patent 3,888,801 contains further information respecting the hydrazodicarboxylates of the invention. The most suitable foaming agent may be prepared in accordance with the technique disclosed in U.S. Patent 3,888,801. This agent is characterized in that its melting temperature is 104-107°C and its decomposition temperature is 271-310°C. Upon its decomposition, it generates an amount of 4-aminourazole corresponding to 15% of its original weight.

The andhydride of the invention is a polymeric compound containing at least one cyclic anhydride in its repeating unit. Preferably the anhydride is a polymeric compound containing at least one maleic acid anhydride unit in its repeating unit; most preferably the anhydride is a copolymer of maleic acid anhydride and an olefin. Examples of suitable olefins are styrene, vinyl ether and methyl vinyl ether. Among the most suitable are the anhydrides which are represented by the structural formula:

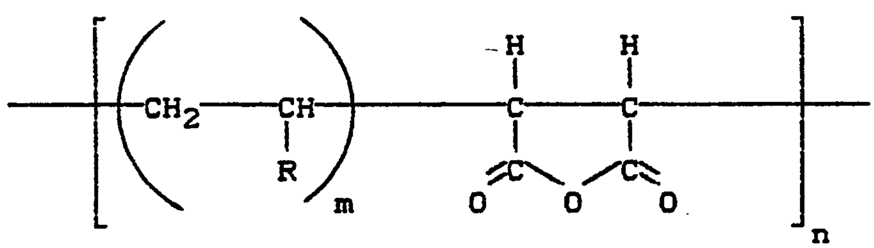

where R is a substituted or an unsubstituted radical selected from the group consisting of $C_6$-$C_{12}$ phenyl, $C_1$-$C_{12}$ alkoxy and $C_1$-$C_{28}$ alkyl radicals. In general, the carbon atoms of R may not be greater in number than 28, while n is an integer of from 1 to 200, and m is an integer of from 1 to 5. In the most preferred embodiment, n is about 145 and m is 1. The preparation of suitable anhydride, namely copolymers of maleic anhydride and an α-olefin is described in U.S. Patent 3,586,659. Examples of olefin compounds suitable for forming the anhydride of the composition include: ethylene; 1-propane; 1-decene, 1-butene; 1-undecene; 1-isobutylene; 1-hexene; 1-dodecene; 1-pentene; 1-tridecene; 1-heptene; 1-octene; 1-tetradecene; 1-octadecene; 1-nonadecene; styrene; 1-nonene and mixtures thereof.

The copolymerization procedure may involve contacting the olefinic compounds with the maleic anhydride in a suitable solvent in the presence of a catalyst. The molar ratio of the mono-α-olefin to maleic anhydride is desirably between 1:1 and 8:1.

The preferred anhydride suitable in the practice of the invention is a copolymer of 1-octadecene and maleic anhydride of a 1:1 molar ratio having a molecular weight of 50000, and is available from Gulf Oil Chemical Company under the tradename PA-18®. PA-18® is further characterized by its properties shown in the table below:

| | |
|---|---|
| Color/form | White powder |
| Molecular weight | 50,000 |
| Specific gravity | 0.97 |
| Melting point range | 110-120 |
| Inherent viscosity[(1)] | 0.10-0.13 |
| Viscosity (a 150°C: (cps) | 20,000 |
| (a 160°C: (cps) | 8,000 |
| Anhydride equivalent, meg/g | 3.10-3.25 |
| Neutralization equivalent, meg/g | 4.83-5.53 |
| Anhydride content, wt. % | 15-23 |
| Acid content, wt. % | 5-10 |
| Volatiles, % | 1 |
| Residual monomer | 3 |
| Thermal stability (a 250°C (wt. loss %) | 1 |
| (a 300°C (wt. loss %) | 3 |
| (a 350°C (wt. loss %) | 10 |
| (a 400°C (wt. loss %) | 23 |

(1) 5 gm/100 ml in methylisobutyl ketone at 25°C.

PA-10® and PA-6® too are anhydrides suitable in the present context and are largely similar to PA-18® except for their respective olefins. In these anhydrides the corresponding olefins are α-decene and α-hexene.

Additionally, the composition of the invention needs to contain an amount of a nucleating agent sufficient to bring a uniform size distribution of the cells. The amount of nucleating agent is 0.05 to 5 percent by weight relative to the weight of the thermoplastic resin (i). The nucleating agent for structural foams are well known in the art and among them, mention is made of milled glass, glass fibers and talc.

Illustrations of the invention

In the preparation of the composition in accordance with the invention and of the comparison examples the following materials and conditions were used.

The polycarbonate resin was a homopolymer based on bisphenol A, having a melt flow rate, per ASTM D-1238, of 5.1 gms/10 min., and a $\overline{M}_W$ of approx. 30 000. The anhydride was PA-18®. Other anhydrides differing from PA-18® in terms of the chain length of the α-olefin are noted wherever used.

The chemical blowing agent used in illustrating the invention conforms to formula (I) above. The prior art chemical blowing agent was 5-phenyl tetrazole. In preparing the examples which are noted below, glass fibers at an amount of 4.5% were used both as a nucleating agent and to provide rigidity to the resulting foam. The compositions contained, where noted, a flame retarding agent (potassium perfluorobutane sulfonate), a phosphite stabilizer and a pigment, none of which are believed critical to the invention.

Extrusions were carried out using a single screw extruder (2.75:1 screw, 100 rpm at 275°C). The pellets were injection molded into foamed discs (6,4 mm x 10.16 cm) under the following conditions: mold temperature 77°C cycle time 60 seconds, screw speed 75 rpm, barrel temperature 300° C, melt temperature 295° C, primary injection pressure 12.5 MPa (127 kg/cm$^2$), secondary injection pressure 0, back pressure 0.695 MPa (7,03 kg/cm$^2$).

In the process of preparing the molded part, resinous polycarbonate pellets containing the anhydride and no blowing agents were blended with a blowing agent concentrate and injection molded. Variations of the preparation process including using the blowing agent per se rather than the concentrate are also possible. The concentrates used in the course of preparation of compositions in accordance with the invention contained polycarbonate resin and 10% of the foaming agent of formula (I). The prior art concentrates contained 10% of 5-phenyltetrazole and a plasticizer.

In evaluating the properties of the molded articles, Gardner impact tester (Model IG1120-M with a tup diameter of 1.27 cm and a 3.18 cm diameter base) was used. Any crack seen or felt opposite the point of impact was regarded as failure of the tested specimen. The quantitative assessment of the impact resistance in N • m (impact resistance) made use of the Bruceton staircase method, per ASTM D-3029. The Instron melt stability is a measure of the apparent viscosity of a resin as a function of time at constant temperature (300° C), and shear rate (56.7 sec.$^{-1}$). An Instron melt rheometer was used for this determination. Melt flow rate (MFR) was determined in accordance with ASTM D-1238 (300° C - 1200 g load), the units are gm/10 min.

The invention is further illustrated, but is not intended to be limited by the following examples in which all parts and percentages are by weight unless otherwise specified.

EXAMPLES

Examples 1-6

In these examples pellets comprising a polycarbonate resin and an anhydride (PA-18)® were blended with a blowing agent concentrate containing the foaming agent of formula (I) above. A series of comparison examples entailed similar pellets except that the blowing agent concentrate contained 5-phenyl-tetrazole. The amount of the chemical blowing agent in the blends was calculated to yield equal foaming to the molded parts, that is equal reduction in density. The reduction of density was 20%.

Table 1

| Example | Anhydride Content (%) | MFR(2) of Pellet | MFR(2) of Part | Impact Resistance (In. lb.) | | N·m | MFR(2) | Impact Resistance (in. lb.) | | N·m |
|---|---|---|---|---|---|---|---|---|---|---|
| | Properties of Compositions of the Invention | | | | | | Properties of Prior Art Compositions | | | |
| 1(3) | 0 | 5.4 | 23.0 | 134 | = | 15.2 | 25.6 | 139 | = | 15.5 |
| 2(3) | 0.8 | 5.1 | 16.1 | 268 | = | 28.5 | 31 | 118 | = | 13.2 |
| 3(3) | 1.6 | 5.1 | 9.7 | 292 | = | 33.0 | 23.3 | 125 | = | 14.2 |
| 4(1) | 1.6 | 5.7 | ---- | 191 | = | 21.4 | ---- | ---- | | |
| 5(1) | 0.8 | 4.4 | ---- | 206 | = | 23.0 | ---- | ---- | | |
| 6(1) | 0 | 3.3 | ---- | 169 | = | 19.0 | ---- | 136 | = | 15.3 |

(1) Pigmented resin

(2) In accordance with ASTM D-1238

(3) These compositions contained 0.1% of a flame-retarding agent; all compositions contained 4% of glass fibers.

Examples 7-13

Additional compositions in accordance with the invention were prepared and foamed molding made therefrom. The base resin in this series consisted of a blend (9.75/5.25 by weight) of bisphenol A based homopolycarbonates having a MFR of 4.2 and 9.4 gm/10 min, respectively. The compositions all contained 4.5% glass fibers as a nucleating agent and the foaming agent of the formula (I) above in an amount calculated to yield equal foaming to the moled parts; composition 13 in this series made use of 5-phenyl tetrazole. The reduction of density was 20%.

Table 2

| Example | Anhydride Content in the pellets | MFR of Pellet | MFR of the Composition | Impact Resistance of Part ( in. lb.) | | N·m |
|---|---|---|---|---|---|---|
| 7 | 0 | 9.4 | 25.1 | 122 | = | 13.8 |
| 8 | 1.0[(1)] | 8.7 | 15.7 | 188 | = | 21.0 |
| 9 | 0.67 | 8.9 | 15.7 | 193 | = | 21.4 |
| 10 | 0.59 | 8.3 | 21.7 | 135 | = | 15.3 |
| 11 | 2.2 | 7.9 | 34.4 | 96[(3)] | = | 11.0 |
| 12 | 4.6 | 8.9 | 20.5 | 148 | = | 16.6 |
| 13 | 0[(2)] | | 33.4 | 93 | = | 10.4 |

(1) The anhydride used in this series are as follows:
Example 8: PA-18; Example 9: PA-10; Example 10: PA-6; Example 11: Dylark 350 (a styrene-maleic anhydride copolymer - approx. 12% anhydride from Arco, Inc.), Example 12: Dylark 232 (similar to Dylark 350 except for 6% maleic anhydride).

(2) foamed with 5-phenyltetrazole

(3) the low value is believed to have resulted from hydrolysis of the anhydride functional group.

Other additives introduced in similar compositions in substitution for the anhydrides of the invention proved unsuccessful. Among these were epoxy-bearing compounds and monomeric anhydrides (pyromellitic dianhydride, phthalic anhydride and tetrabromophthalic anhydride).

Example 14-21

Additional compositions in accordance with the invention were prepared and their properties determined. The preparation followed the procedure outlined above. Except for Example 15 where 5-phenyltetrazole served as a foaming agent, the compositions below were foamed using the foaming agent having the formula (I) above; the amount of foaming agent in each case was calculated to bring about equal reduction in density to the molded part. All the compositions maintained 4.5% of glass fibers as a nucleating agent. The reduction of density was 20%.

Table 3

| Example | Anhydride Content | MFR (Pellet) | MFR (Part) | Impact Resistance (in. lb.) | | N·m |
|---|---|---|---|---|---|---|
| 14 | (Control A)(1) | 3.2 | 16.7 | 155 | = | 17.4 |
| 15 | (Control B)(2) | 3.2 | 17.8 | 164 | = | 18.4 |
| 16(3) | PA-18; 0.3% | 4.3 | 19.1 | 347 | = | 39.0 |
| 17(3) | PA-18; 1.0% | 4.7 | 23.5 | 181 | = | 20.3 |
| 18(3) | PA-10; 0.3% | 4.1 | 20.2 | 252 | = | 28.1 |
| 19(3) | PA-10; 1.0% | 3.6 | 11.4 | 202 | = | 23.0 |
| 20(3) | PA-6; 1.0% | 4.0 | 15.4 | 305 | = | 35.0 |
| 21 | Gantrez(4); 1.0% | 4.8 | 8.7 | 317 | = | 35.5 |

(1) no anhydride was added; foaming by the agent of formula (I)

(2) no anhydride was added; foaming by 5-phenyltetrazole

(3) The anhydride in compositions 16-20 were heated before using at 90$^0$C for 16 hours 31 mbar to assure dehydration.

(4) A copolymer of methyl vinyl ether and maleic anhydride(1:1 mole ratio, molecular weight - by membrane osmometry in 2-butanone 1-10 gms/1000 ml solution - 50,000; a product of GAF)

Examples 22 - 29

In the series of experiments which are described below, comparisons were drawn between compositions of the invention in terms of the dependence of their melt stability on the degree of hydrolysis of the anhydride resins. The base composition contained the same ingredients entailed in the above compositions except for the noted anhydrides below.

Table 4

| Example | Anhydride Added | Melt Viscosity kPa at $300^0 C$ 5 min. | 35 min. | 65 min. | kPa(1) |
|---|---|---|---|---|---|
| 22 | PA-10 (h); 0.3% | 1577 | 1504 | 1153 | 424 |
| 23 | PA-10 (d); 0.3% | 1479 | 1293 | 1241 | 238 |
| 24 | PA-18 (h); 0.3% | 1768 | 1370 | 1328 | 440 |
| 25 | PA-18 (d); 0.3% | 1500 | 1344 | 1318 | 182 |
| 26 | PA-10 (h); 1.0% | 1706 | 827 | ---- | 879(2) |
| 27 | PA-10 (d); 1.0% | 1675 | 1293 | 1070 | 382(2) |
| 28 | PA-18 (h); 1.0% | 1747 | 1189 | 931 | 816 |
| 29 | PA-18 (d); 1.0% | 1344 | 1075 | 791 | 553 |

(h) hydrolyzed additive

(d) dehydrated (vacuum dried at $90^0 C$ for 16 hours) additive

(1) after 65 minutes

(2) after 35 minutes

Since the lowered melt viscosity indicates molecular weight reduction which is associated with degradation, the data - Instron melt stability - shows that the dehydrated additives caused less of a molecular weight reduction in the compositions of the invention.

Generally, the amount of blowing agent used in the present invention depends on the resin to be expanded and on the desired density of the foam thus produced. Usually 0.05 to 15, preferably 0.1 to 5.0 parts of blowing agent are used per 100 parts by weight of the resin.

The amount of anhydride to be used in the preparation of the molding composition is 0.01 to 10 percent, preferably 0.05 to 2 percent in relation to the weight of the resin.

Optionally, reinforced glass fibers in an amount of 5-30 percent by weight may be included in the composition.

The composition of the invention may contain further additives which are known in the art for their efficacy in the context of foamable molding compositions. These include various reinforcing agents, fillers, pigments and dyes, plasticizers, UV and hydrolysis stabilizers, flame retardants and mold release agents. In practicing the invention, it is preferred to compound first the resin, the anhydride and the auxiliary additives and form pellets therefrom. These pellets are then blended with a blowing agent concentrate containing a suitable amount of the blowing agent and nucleating agent of the invention. The mixing may be carried out in a known manner utilizing known equipment. Preferably, mixing may be carried out in an extruder.

Reasonable variations and modifications are possible within the scope of the foregoing disclosure and the claims which follow, without departing from the spirit thereof.

Reasonable variations and modifications are possible within the scope of the foregoing disclosure and the claims which follow, without departing from the spirit thereof.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A foamable thermoplastic molding composition comprising
(i) a foamable thermoplastic resin,
(ii) 0.01 to 10 percent of a polymeric compound containing at least one cyclic anhydride in its repeating unit,
(iii) 0.05 to 15 percent of a chemical blowing agent which decomposition product comprises a primary amine, and
(iv) an amount of 0.05 to 5 percent of a nucleating agent for structural foam sufficient to produce a substantially uniform cell size in the resulting foam,
said percents being in relation to the weight of said (i).

2. The molding compositions of Claim 1 wherein said (i) is selected from the group consisting of polycarbonate, polyalkylene terephthalate, aromatic polyester and polyester-carbonate.

3. The molding composition of Claim 1 wherein said polymeric compound is present at an amount of 0.1 to 5 percent.

4. The molding composition of Claim 1 wherein said anhydride conforms to

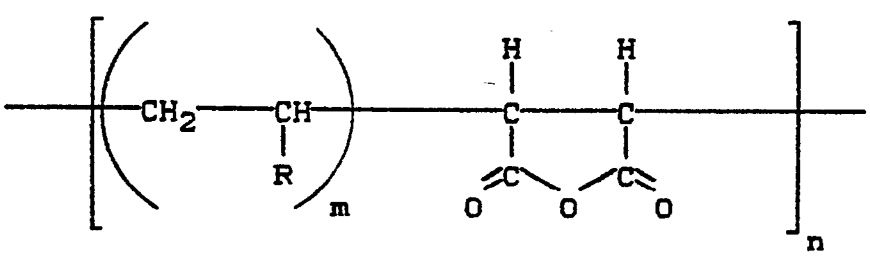

where R is a substituted or an unsubstituted radical selected from the group consisting of $C_6$-$C_{12}$ phenyl, $C_1$-$C_{12}$ alkoxy and $C_1$-$C_{28}$ alkyl radicals. n is an integer of from 1 to 200 and m is 1 to 5,

5. The molding composition composition of Claim 1 wherein said (iii) conforms to

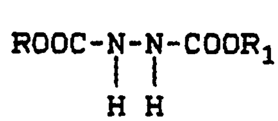

wherein R and $R_1$ independently denote a member selected from the group consisting of primary, secondary and tertiary straight-chain or branched-chain $C_1$-$C_8$ alkyl, $C_5$-$C_8$ cycloalkyl, $C_6$-$C_{10}$ aralkyl and $C_7$-$C_{10}$ alkaryl radicals.

6. The molding composition of Claim 5 wherein at least one of R and $R_1$ is selectd from the group consisting of isopropyl, secondary butyl and tertiary butyl radicals and the other of R and $R_1$ is $C_1$-$C_4$ alkyl.

7. The molding composition of Claim 5 wherein $R_1$ and R independently are selected from the group consisting of isopropyl, secondary butyl and tertiary butyl.

8. A foamable thermoplastic molding composition according to Claim 1 comprising
(i) a thermoplastic polycarbonate resin,
(ii) 0.01 to 10 percent of a 1:1 copolymer of α-octadecene and maleic anhydride having a molecular weight of about 50,000 and
(iii) 0.05 to 15 percent of diisopropyl hydrazodicarboxylate, and
(iv) 0.05 to 5 percent by weight of a nucleating agent selected from the group consisting of milled glass, glass fibers and talc,
said percents being relative to the weight of said (i).

9. The molding composition of Claim 1 further comprising glass fiber reinforcements,

10. The molding composition of Claim 1 further comprising glass fiber reinforcements and flame-retarding agents.

## Patentansprüche

1. Verschäumbare thermoplastische Formstoffzusammensetzung, umfassend
(i) ein verschäumbares thermoplastisches Harz;
(ii) 0,01 bis 10 % einer polymeren Verbindung, enthaltend in ihrer sich wiederholenden Einheit mindestens ein zyklisches Anhydrid;
(iii) 0,05 bis 15 % eines chemischen Treibmittels, dessen Zersetzungsprodukt ein primäres Amin umfasst; sowie
(iv) eine Menge von 0,05 bis 5 % eines Nukleierungsmittels für einen strukturellen Schaum, welche hinreicht, um in dem sich ergebenden Schaum eine im wesentlichen einheitliche Zellgrösse zu erzeugen;
wobei die genannten Prozentangaben auf das Gewicht von (i) bezogen sind.

2. Formstoffzusammensetzung gemäss Anspruch 1, dadurch gekennzeichnet, dass das unter (i) genannte Harz aus der Gruppe ausgewählt ist,
bestehend aus Polycarbonat, Polyalkylenterephthalat, aromatischem Polyester und Polyesterkarbonat.

3. Formstoffzusammensetzung gemäss Anspruch 1, dadurch gekennzeichnet, dass die genannte polymere Verbindung in einer Menge von 0,1 bis 5 % vorliegt.

4. Formstoffzusammensetzung gemäss Anspruch 1, dadurch gekennzeichnet, dass das genannte Anhydrid der Formel

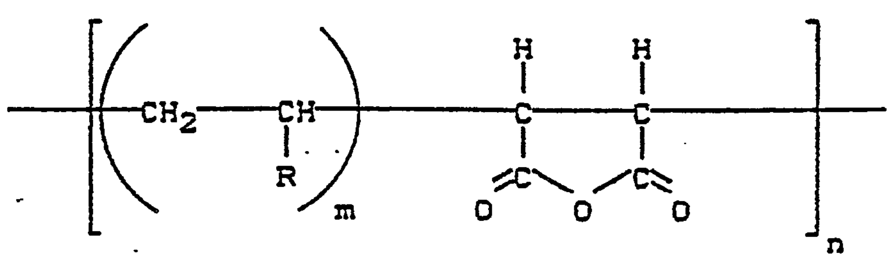

entspricht, worin R ein substituierter oder unsubstituierter Rest, ausgewählt aus der Gruppe, bestehend aus $C_{6-12}$-Phenyl-, $C_{1-12}$-Alkoxy- und $C_{1-28}$-Alkylresten, n eine ganze Zahl von 1 bis 200 und m 1 bis 5 sind.

5. Formstoffzusammensetzung gemäss Anspruch 1, dadurch gekennzeichnet, dass das unter (iii) genannte Treibmittel der Formel

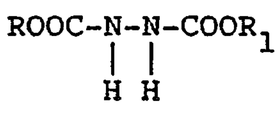

entspricht, worin R und $R_1$, unabhängig voneinander, einen Rest darstellen, ausgewählt aus der Gruppe,
bestehend aus primären, sekundären und tertiären geradkettigen oder verzweigten $C_{1-8}$-Alkyl-, $C_{5-8}$-Cycloalkyl-, $C_{6-10}$-Aralkyl- und $C_{7-10}$-Alkarylresten.

6. Formstoffzusammensetzung gemäss Anspruch 5, dadurch gekennzeichnet, dass mindestens ein R oder $R_1$ aus der Gruppe ausgewählt ist, bestehend aus Isopropyl-, sekundären Butyl- und tertiären Butylresten, und der andere $C_{1-4}$-Alkyl ist.

7. Formstoffzusammensetzung gemäss Anspruch 5, dadurch gekennzeichnet, dass $R_1$ und R, unabhängig voneinander, aus der Gruppe ausgewählt sind, bestehend aus Isopropyl, sekundärem Butyl und tertiärem Butyl.

8. Verschäumbare thermoplastische Formstoffzusammensetzung gemäss Anspruch 1, umfassend
(i) ein thermoplastisches Polycarbonatharz;
(ii) 0,01 bis 10 % eines 1:1-Copolymer von alpha-Octadecen und Maleinsäureanhydrid mit einem Molekulargewicht von ca. 50 000; und
(iii) 0,05 bis 15 % Diisopropylhydrazodicarboxylat; sowie
(iv) 0,05 bis 5 Gew.% eines Nukleierungsmittels, ausgewählt aus der Gruppe, bestehend aus gemahlenem Glas, Glasfasern und Talk;
wobei die Prozentangaben auf das Gewicht des unter (i) genannten Harzes bezogen sind.

9. Formstoffzusammensetzung gemäss Anspruch 1, welche ferner Glasfaserverstärkungen enthält.

10. Formstoffzusammensetzung gemäss Anspruch 1, welche ferner Glasfaserverstärkungen und Flammschutzmittel enthält.

## Revendications

1. Une composition de moulage thermoplastique gonflable en mousse comprenant
(i) une résine thermoplastique gonflable en mousse,
(ii) 0,01 à 10 % d'un composé polymère contenant au moins un anhydride cyclique dans son motif répété,
(iii) 0,05 à 15 % d'un agent gonflant chimique dont le produit de décomposition comprend une amine primaire et
(iv) de 0,05 à 5% d'un agent de nucléation pour mousse structurelle, quantité suffisante pour assurer une dimension de cellule pratiquement uniforme de la mousse formée, toutes ces indications de pourcentages se rapportant au poids du composant (i).

2. La composition de moulage de la revendication 1, dans laquelle le composant (i) est choisi parmi les polycarbonates, les téréphtalates de polyalkylène, les polyesters et polyestercarbonates aromatiques.

3. La composition de moulage de la revendication 1, dans laquelle ledit composé polymère est présent en proportions de 0,1 à 5 %.

4. La composition de moulage de la revendication 1, dans laquelle l'anhydride en question répond à la formule

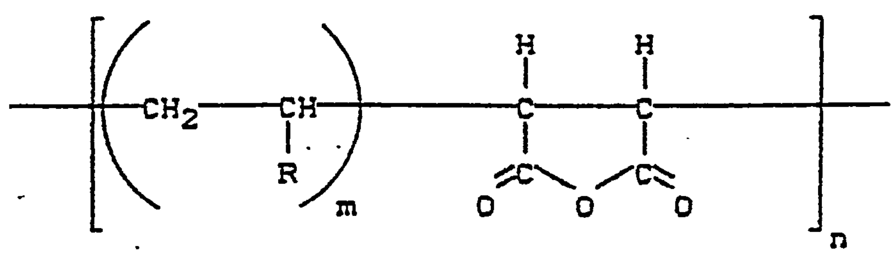

dans laquelle R est un radical substitué ou non choisi parmi les radicaux phényle en $C_6$-$C_{12}$, alcoxy en $C_1$-$C_{12}$ et alkyle en $C_1$-$C_{28}$, n est un nombre allant de 1 à 200 et m un nombre allant de 1 à 5.

5. La composition de moulage de la revendication 1 dans laquelle le composant (iii) répond à la formule

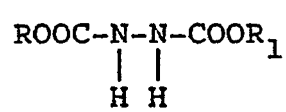

dans laquelle R et $R_1$ sont choisis, indépendamment l'un de l'autre, parmi les groupes alkyle en $C_1$-$C_8$ primaires, secondaires et tertiaires à chaîne droite ou ramifiée, les groupes cycloalkyle en $C_5$-$C_8$, aralkyle en $C_6$-$C_{10}$ et alkylaryle en $C_7$-$C_{10}$.

6. La composition de moulage de la revendication 5, dans laquelle l'un au moins des groupes R et $R_1$ est choisi parmi les groupes isopropyle, sec-butyle et tert-butyle et l'autre est un groupe alkyle en $C_1$-$C_4$.

7. La composition de moulage de la revendication 5, dans laquelle $R_1$ et $R_2$ sont choisis, indépendamment l'un de l'autre, parmi les groupes isopropyle, sec-butyle et tert-butyle.

8. Une composition de moulage thermoplastique gonflable en mousse selon la revendication 1, comprenant

(i) une résine de polycarbonate thermoplastique,
(ii) 0,01 à 10 % d'un copolymère 1 : 1 d'α-octadécène et d'anhydride maléique, à un poids moléculaire d'environ 50 000 et
(iii) 0,05 à 15 % d'hydrazodicarboxylate de diisopropyle et
(iv) 0,05 à 5 % en poids d'un agent de nucléation choisi parmi le verre broyé, les fibres de verre et le talc, tous les pourcentages indiqués se rapportant au poids du composant (i).

9. La composition de moulage de la revendication 1, comprenant en outre des fibres de verre en tant qu'agents renforçants.

10. La composition de moulage de la revendication 1, comprenant en outre des fibres de verre en tant qu'agents renforçants et des agents ignifugeants.